# EUROPEAN PATENT APPLICATION

(11) **EP 2 361 870 A1**
(43) Date of publication of application: **31.08.2011**
(21) Application number: 10425048.5
(22) Date of filing: 25.02.2010
(51) Int. Cl.: B66C 1/66, F16B 35/06

(54) **Eyebolt lifting provided with unscrewing device**

(71) Applicant: Stamperia Carcano Giuseppe S.p.A., 22032 Albese con Cassano (IT)
(72) Inventor: Frigerio, Roberto, 22030 Orsenigo (IT)
(74) Representative: Borsano, Corrado

(57) **Abstract**

Eyebolt or eye lifting device (1) of the type comprising a threaded element for hooking a object to be lifted and a lifting hook or loop capable of turning with respect to said object.
The lifting hook is characterised in that it comprises a bushing (2) adapted to be inserted in the eyebolt so as to make the hook modular, meaning that the same eyebolt (1a) and the same bushing (2) can be indifferently used to make a male hook or a female hook, and is further characterised in that it allows the use of an anti-loosening device (3) which improves the reliability of the hook itself.

## Description

### FIELD OF THE INVENTION

The present invention relates to an eyebolt or loop lifting device of the type comprising a threaded element for hooking to an object to be lifted and a lifting hook or loop capable of rotating with respect to said object.

### PRIOR ART

Eyebolt lifting hooks for lifting heavy objects are known in the field. Said lifting hooks generally comprise an eyebolt or loop hooking element adapted to be hooked and pulled by different means, such as ropes, chains, hoists and the like. The lifting eyebolt or loop is generally connected to the object to be lifted by means of connection means, generally consisting of a threaded pin or a screw, which allows to firmly hook the object to the eyebolt. Furthermore, the longitudinal axis of said threaded pin or screw also constitutes the axis about which said eyebolt or loop is free to rotate, also when it is held by the specific connection means which connect it to the body to the lifted. Indeed, as known, allowing the eyebolt to rotate about the longitudinal axis of the fastening means is an essential safety requirement for this type of hooks. The eyebolt or loop must indeed be able to rotate by 360° with respect to the longitudinal axis of the connection means so as to be able to align itself in the pulling direction.

An example of these devices of type known in the prior art is provided in prior document DE 100 02 899 A1, which describes a female eyebolt provided with a threaded nut for engaging the threaded connection screw, the nut protruding from the lower face of the eyebolt so as to rest on the surface of the object to be lifted. By virtue of the fact that the lower surface of the eyebolt is raised from the surface of the object to be lifted, said eyebolt may rotate about the longitudinal axis of the connection screw, thus being able to be oriented according to the pulling direction. Also prior document EP 0 654 611 shows a lifting hook of the male type, in which the eyebolt can rotate about the longitudinal axis of the connection means, constituted in this case by a threaded screw provided with a head protruding from the lower surface of the eyebolt, allowing the latter to rotate about the axis of the connection means.

All these examples of known technical solutions of the prior art are not however free from drawbacks.

Indeed, considering the male eyebolt object of the patent EP 0 654 611, it is apparent that a particular machining of both the screw head and the inner eyebolt seat is required in order to appropriately accommodate the screw head. For this reason, the eyebolt used as male cannot be used as female eyebolt, and the production of the two products must be diversified with consequent increase of production and stock management costs.

Similar considerations may also be applied to the female eyebolt object of the patent DE 100 02 899 A1, in which the eyebolt, expressly shaped, in particular for the inner seat intended to accommodate the threaded nut, is not suitable to be used as male eyebolt without modifications.

Yet another drawback which concerns the lifting hooks of the known type of the prior art is the fact that the connection means, i.e. the screw or the nut, tend to come loose in use, with the consequent need to frequently check the tightening state to prevent detrimental problems during the use of the hook.

### SUMMARY

It is thus the main object of the present invention to solve the drawbacks which affect lifting hooks of the type known in the prior art.

Within this object, it is the task of the present invention to provide a lifting hook, which is adjustable according to the pulling direction and thus rotatable by 360° about the central symmetry axis thereof, and further has a particularly high safety level with regards to the possible loosening of the connection means of the hook itself to the body to be lifted.

A yet further object of the present invention consists in a lifting hook which constitutes a modular system, which may be used either as male eyebolt or female eyebolt, without needing to provide different shapes for one or more parts of the eyebolt.

This tasks, and others that will be clearer below, are reached by a lifting hook of the type comprising a hooking element and connection means for connecting said hooking element to a body to be lifted, which is characterized in that it comprises a bushing, separated from said connection means, and provided with an axial through hole for the passage of said connection means, adapted to protrude once in place from the lower surface of said hooking element in order to prevent the rotation of said hooking element with respect to the body to be lifted. The lifting hook according to the present invention is further characterized in that it comprises at least one one-way screw device between said bushing and said connection means.

### LIST OF THE FIGURES

Further features and advantages of the present invention will be more apparent in the following detailed description provided by way of non-limitative example and illustrated in the appended figures, wherein:
figure 1 is a perspective view of the lifting hook according to the present invention assembled on an object to be lifted;
figure 2 shows the same perspective view in figure 1 where the lifting hook according to the present invention is disassembled from the object to the lifted;
figure 3 shows a perspective exploded view of all the elements which form the lifting hook according to the present invention;
figure 4 shows a diagrammatic section view of the elements which constitute the lifting hook according to the present invention, assembled to one another.

### DETAILED DESCRIPTION OF AN EMBODIMENT

The lifting hook according to the present invention will now be described with particular reference to a preferred embodiment shown in the accompanying figures and herein considered by way of non-limiting example only.

The scope of protection of the present patent is thus given by its claims and must not in any manner be limited to the illustrations or preferred embodiments described by way of example, but rather the claims must include all the features of patentable novelty inferable from the present invention, including all the features which would be treated as equivalent by a person skilled in the art.

With particular reference to the appended figures, the lifting hook according to the present invention comprises a hooking element 1 comprising an eyebolt or loop 1 a intended to be coupled to lifting means, such as ropes, chains, hoists and the like. Said eyebolt 1 a is connected to a substantially cylindrical base element 1b having an axial, shaped through hole 1 c. Said axial hole 1 c has at the end thereof proximal to the base of said basic element 1b, a narrowing of the through hole made by a circular crown 1d which protrudes towards the inside of said base element 1 b constituting a resting surface for a bushing 2.

The bushing 2 is also substantially cylindrical and has an axial hole, therefore said bushing has a substantially toroidal shape and has a lower diameter portion 2a adapted to be inserted, with a given clearance, in the lower diameter portion of said axial hole of the base element 1 b of the eyebolt 1, and a larger diameter portion 2b adapted to abut against the circular crown 1d integral with the base element 1 b.

By virtue of this configuration of the inner profile of the hole 1c and of the outer profile of the bushing 2, the bushing 2 may be accommodated in the hole 1c so that it firmly weighs on the crown 1d, and the dimensions of the profiles are such that once it has been correctly positioned within the cavity 1c the bushing protrudes underneath the lower surface of the base element 1 b.

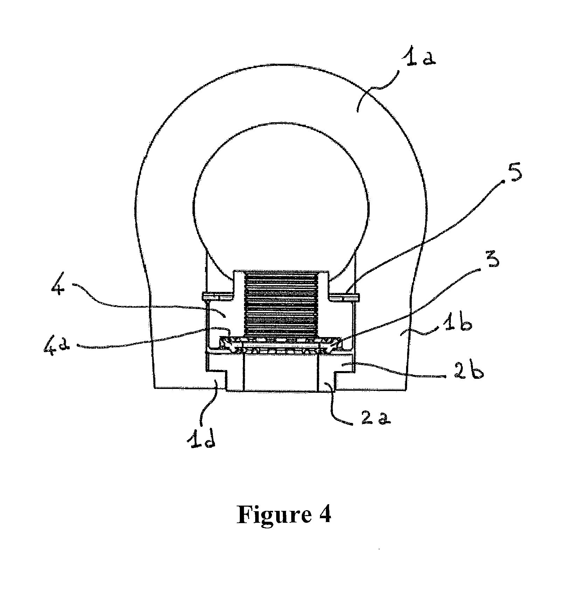

This configuration of the through hole 1c and of the bushing 2 is clearly visible, e.g. in figure 4. As shown in the figure, the bushing protrudes by minimum measure from the lower surface of the hooking element 1, but this is sufficient to ensure that, after having assembled the hook, the lower surface of the base element 1 b does not slip against the body to be lifted 10, which would obstruct the rotation of the hooking element 1, relative to the body to be lifted 10, needed for it to be oriented in the pulling direction, as determined.

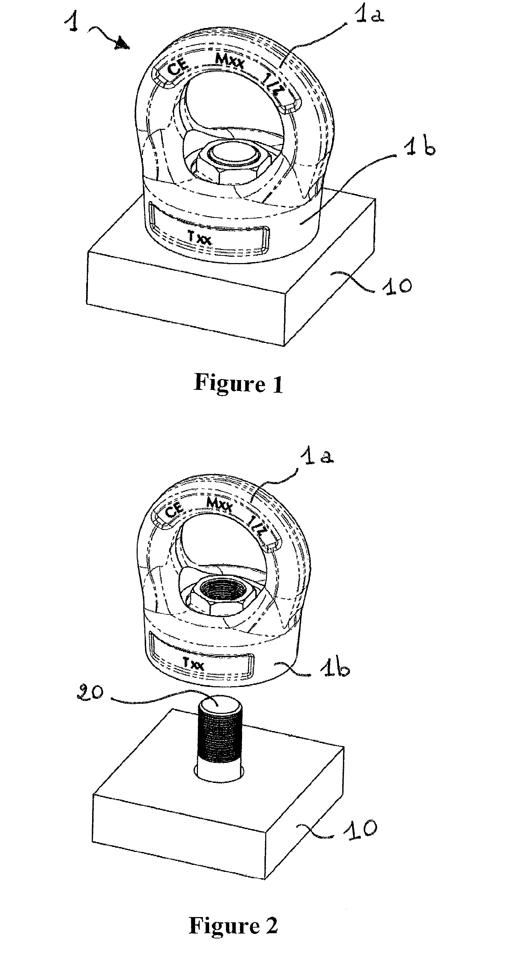

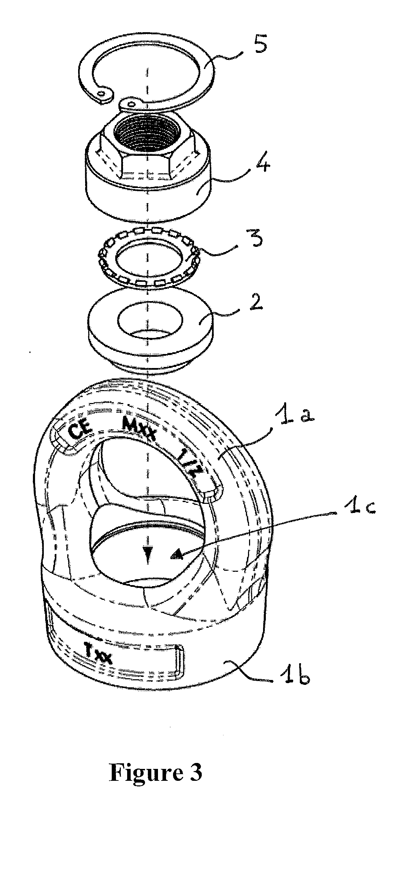

Again with reference to the appended figures, in particular figures 2 and 3, the lifting hook according to the present invention comprises, as mentioned, a hooking element 1 adapted to be connected by means of connection means 20 to the body 10 to be lifted.

As known, said connection means 20 may advantageously comprise either a screw or a bolt, to which a nut will be associated.

The appended figures show a lifting hook of the so-called female type, i.e. in which the connection means consist of a bolt which enters the axial hole 1c of the hooking element and is then tightened with a threaded nut, indicated by reference numeral 4 in the figures.

Although the case of a female lifting hook is illustrated here in the appended figures, obviously the lifting hook according to the present invention may be similarly used also in the case of a male lifting hook. In this case, the shape of the hooking element 1 is identical to that illustrated hitherto, and the bushing 2 is also identical, while instead of providing a bolt 20 adapted to be inserted in a threaded nut 4, the connection means comprise a screw provided with an appropriately shaped head, said screw being adapted to be inserted in the axial hole of the bushing 2, in turn positioned in the seat of the through hole 1c of the hooking element 1, said screw having an appropriately shaped head so as to reproduce the profile of the threaded nut 4, in order to correctly operate in tightening the connection means.

The innovative feature which makes it possible to use the hooking element 1 according to the present invention either as "male" or as "female" is the presence of the bushing 2. Indeed, the bushing 2 allows to lift the lower surface of the base element 1 b from the body to be lifted 10, regardless of the fact that the connection means consist of a bolt 20 and a threaded nut 4 as in the figures or of a screw provided with a head adapted to be inserted in the cavity 1c, which comes into contact with the lower surface of said head, according to an alternative embodiment, not shown in the appended figures.

Furthermore, the presence of the bushing 2 allows to insert an anti-loosening device 3 either between said bushing 2 and said threaded nut 4 in the case of the female eyebolt shown in the drawings, or between said bushing 2 and said head, in the case of a screw for male eyebolt.

Now with reference to the female version of the lifting hook according to the present invention illustrated in the appended figures, the connection of the hooking element 1 with the threaded element 20, a bolt in the example, which belongs to the connection means, is obtained by means of the threaded nut 4 which, as mentioned, is appropriately shaped.

The anti-loosening device 3, e.g. consisting of a spring washer, is inserted between the lower surface of said nut 4 and the upper surface of said bushing 2. In order to maintain the anti-loosening device 3 in the seat, as shown for example in figure 4, an appropriate seat 4a is obtained at the surface of the nut 4 intended to face the bushing 2, after assembly of the elements, also visible in figure 4 as a recess of the central part of the lower surface of the nut 4. The geometry of such seat 4a is such that, after tightening, the base of the nut 4 works in contact against the bushing 2, while the anti-loosening device 3 is compressed in its seat and prevents an unexpected loosening of the nut during use.

Similarly, as described, an anti-loosening device may appropriately be provided between said bushing 2 and the lower surface of the head of a screw in case of male eyebolt.

Again with reference to figure 3, a stop device 5, e.g. a seeger ring, may advantageously be provided in a specific seat obtained in the inner surface of the hole 1 c of the base element 1 b, so as to constrain the nut 4, or the head of the screw in case of male eyebolt, the anti-loosening device 3 and the bushing 2 in the correct position inside the device.

Alternatively, instead of the seeger ring, the stop device may consist of a plurality of protuberances obtained by plastic deformation on the top of the hooking element 1.

We have thus shown how the lifting device according to the present invention reaches the suggested objects.

In particular, we have shown that the lifting hook according to the present invention is modular, because it allows to use the same hooking element or eyebolt either if a female lifting hook is made, i.e. if a threaded element must be locked by means of a nut housed in a specific seat obtained inside the hooking element, or if a male lifting hook is made, i.e. in which a screw with a head is inserted in the axial hole obtained in the hooking element or eyebolt so that the free end thereof can be freely fastened in the body to be lifted afterwards. Furthermore, for both of these uses, the lifting hook according to the present invention allows to prevent unscrewing or loosening of the tightening of the connection means, also in this case for all system uses either as male eyebolt or as female eyebolt.

We have shown that the suggested solution allows to effectively solve the tightening problem also of devices, such as the eyebolt or loop hooking elements, in which precisely thereof supplementary devices above the nut, such as for example a lock nut, cannot be used due to the particular geometry because this would unacceptably reduce the active space for the connection of the lifting means.

The adoption of the system suggested with the present invention, mainly consisting in using either a bushing separate from the nut (for the female eyebolt), or the head of the screw (for the male eyebolt), allows to place an anti-loosening device between said two elements thereby effectively solving a highly felt need in this field.

Many changes may be made by a person skilled in the art without departing from the scope of protection of the present invention.

## Claims

1. A lifting hook of the type comprising a hooking element (1) comprising an eyebolt (1 a) and a base element (1b) provided with a substantially cylindrical through hole (1 c) for inserting connection means (4, 20) adapted to connect said hooking element (1) to a body to be lifted (10), **characterized in that** said through hole (1 c) has a section narrowing (1 d) which forms a locator adapted to support a bushing (2), separated from said connection means and having a substantially toroidal shape and provided with non-threaded axial through hole, so that said bushing (2) may be accommodated in the hole (1 c) so that it weighs firmly on said section narrowing (1d) and which at least partially protrudes underneath said lower surface of the base element (1b), and **characterized in that** it further comprises an anti-loosening device (3) positioned between said bushing (2) and said connection means (4, 20).

2. A lifting hook according to the preceding claim, **characterized in that** said connection means comprise at least one nut (4) adapted to be inserted in said hole (1 c) of said base element (1b) and at least one bolt (20) adapted to connect said hook to a body (10).

3. A lifting hook according to the preceding claim, **characterized in that** said anti-loosening device (3) is arranged between said bushing (2) and said nut (4).

4. A lifting hook according to claim 1, **characterized in that** said connection means comprise at least one screw adapted to be inserted in said bushing (2) when it is positioned in its seat provided for this purpose in said through hole (1 c), the head of said screw being appropriately shaped so as to abut against said bushing (2).

5. A lifting hook according to the preceding claim, **characterized in that** said anti-loosening device (3) is arranged between said bushing (3) and the head of said screw.

6. A lifting hook according to any preceding claim, **characterized in that** said bushing (2) has a toroidal shape and is made in one piece.

7. A lifting hook according to one or more of the preceding claims, **characterized in that** said anti-loosening device (3) consists of a spring washer.

8. A lifting hook according to one or more of the preceding claims, **characterized in that** it further comprises at least one stop device (5) adapted to constrain said connection means (4, 20) in the correct position inside said device.

9. A lifting hook according to the preceding claim, **characterized in that** said stop device (5) consists of a seeger ring.

10. A lifting hook according to claim 8, **characterized in that** said stop device (5) consists of a plurality of protuberances obtained on the top of the hooking element (1).
